# EUROPÄISCHE PATENTSCHRIFT

(11) **EP 0 659 241 B1**
(45) Veröffentlichungstag und Bekanntmachung des Hinweises auf die Patenterteilung: **13.03.1996**
(21) Anmeldenummer: 93918894.2
(22) Anmeldetag: 18.08.1993
(51) Int. Cl.: F16D 65/16, F16D 55/226

(54) **DRUCKLUFTBETÄTIGTE SCHEIBENBREMSE**
COMPRESSED-AIR ACTUATED DISC BRAKE
FREIN A DISQUE A AIR COMPRIME

(30) Priorität: 08.09.1992 DE 4230004
(43) Veröffentlichungstag der Anmeldung: 28.06.1995
(73) Patentinhaber: KNORR-BREMSE SYSTEME FÜR NUTZFAHRZEUGE GmbH, D-80809 München (DE)
(72) Erfinder: HARTL, Michael, D-80339 München (DE)
(74) Vertreter: KUHNEN, WACKER & PARTNER
(86) Internationale Anmeldenummer: DE9300751
(87) Internationale Veröffentlichungsnummer: WO9405925

(56) Entgegenhaltungen:
- DE-A- 2 618 966
- DE-A- 3 025 882
- DE-A- 3 716 202
- DE-A- 4 032 885
- DE-A- 4 212 384
- GB-A- 2 114 692
- US-A- 3 613 837

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der **DE-OS 37 16 202** sowie aus der **DE-OS 40 32 885** bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der mittels eines im wesentlichen halbkreisförmigen Drehlagers um eine zur Ebene der Bremsscheibe parallel verlaufende Drehachse schwenkbar gelagert ist und der einen Betätigungsarm aufweist, dessen Endbereich mit dem Druckkolben eines Bremszylinders derart in Eingriff steht, daß bei Druckluftbeaufschlagung eine entsprechende Verschwenkung des Drehhebels erfolgt. Der Drehhebel liegt auf seiner der Bremsscheibe zugewandten Seite mittels eines Exzenters etwa längsmittig an einer sich parallel zur Drehachse ersterkennen Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei jede Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt. Die Bremsbacke besteht aus einem Bremsbelag und einer metallischen Druckplatte, auf die das Druckstück der jeweiligen Stellspindel einwirkt.

Bei diesen bekannten Scheibenbremsen liegt ein grundsätzliches Problem darin, daß das Gewicht möglichst gering gehalten werden sollte, um die ungefederten Massen des Fahrzeugs zu minimieren. Jedoch muß insbesondere der Aufbau der Zuspannvorrichtung und des Bremssattels so stabil und verwindungssteif wie möglich sein, um einen guten Wirkungsgrad und eine geringe Hysterese der Bremse zu gewährleisten. Es ist somit äußerst schwierig, das Gewicht der Bremse unter Beibehaltung der erforderlichen Güteeigenschaften wesentlich zu verringern. So wurde z.B. auch gefunden, daß selbst der Torsionsfestigkeit des Drehhebels insofern erhöhte Bedeutung zukommt, als jegliche Verwindung die Laufeigenschaften der Hebellager erheblich verschlechtert, was sich unmittelbar auf den Wirkungsgrad und die Hysterese auswirkt. Bislang verwendete Drehhebel wurden daher zur Optimierung des Wirkungsgrads und der Hysterese weitgehend massiv und einstückig hergestellt, um die Torsionsfestigkeit so hoch wie möglich zu machen.

Der Erfindung liegt die Aufgabe zugrunde, eine druckluftbetätigte Scheibenbremse gemäß dem Oberbegriff des Anspruchs 1 derart weiterzubilden, daß unter Beibehaltung eines hohen Wirkungsgrads und einer geringen Hysterese eine gewisse Gewichtsreduzierung erzielbar ist.

Diese Aufgabe wird erfindungsgemäß mit dem im Kennzeichnungsteil des Anspruchs 1 angegebenen Maßnahmen gelöst.

Untersuchungen haben überraschend gezeigt, daß eine brauchbare Alternative zu einem massiven Drehhebel in der Verwendung eines gabelförmigen Drehhebels liegt, bei dem sich vom Endbereich seines Betätigungsarms her zwei Schenkeln erstrecken bzw. auf gabeln, wobei das halbkreisförmige Drehlager sowie die Lagerung des Exzenters jeweils durch entsprechende Lagerpaare in den Endbereichen der Schenkel gebildet sind. Ein derartiger gabelförmiger Drehhebel weist ein wesentlich geringeres Gewicht auf als ein massiver Drehhebel, so daß das Gesamtgewicht der Scheibenbremse und die ungefederten Massen entsprechend verringert werden. Darüber hinaus ergibt sich eine vergleichsweise hohe Materialeinsparung. Ein Drehhebel dieser Art ist bereits in Prinzip aus der nicht gattungsgemäßen DE-A-2 618 966 bekannt.

Weitere Untersuchungen haben jedoch ergeben, daß bei einem derartigen gabelförmigen Drehhebel gleichwohl Torsionsspannungen auftreten können, und zwar insbesondere in den beiden Schenkeln. Hierdurch kann nicht immer vermieden werden, daß die (insgesamt vier) Lager des Drehebels und des von diesem betätigten Exzenters optimale Laufeigenschaften aufweisen, so daß sich u.U. eine gewisse Verschlechterung des Hystereseverhaltens und des Reibbeiwerts einstellt.

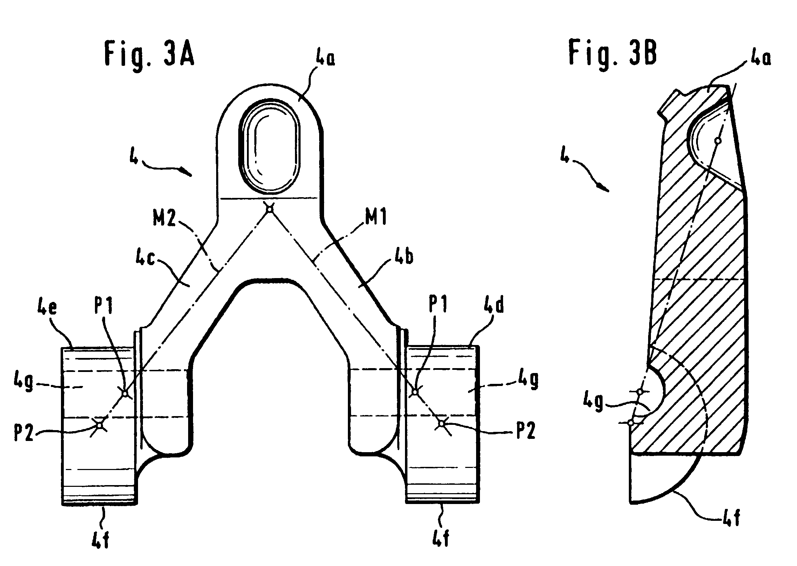

Dieses Problem wird gemäß einem wesentlichen Aspekt der Erfindung dadurch gelöst, daß die Anordnung der beiden Lager in jedem Schenkel sowie der Verlauf der beiden Schenkel so gewählt wird, daß die theoretischen Punkte der Krafteinleitung dieser beiden Lager (von oben gesehen) im wesentlichen auf der Mittellinie des betreffenden Schenkels liegen, wie dies aus der Draufsicht-Darstellung in Fig.3 zu erkennen ist. Mit dieser Maßnahme wird erreicht, daß die Krafteinleitung von der Mittellinie des Schenkels nicht abweicht, was dazu führt, daß praktisch keine Torsionsspannungen im gabelförmigen Drehhebel aufgebaut werden. Infolgedessen werden keinerlei Querspannungen auf die Lager aufgebracht, so daß diese mit dem optimalen Reibbeiwert und nahezu hysteresefrei arbeiten.

Gemäß der im Anspruch 3 angegebenen Weiterbildung der Erfindung kann die Lagerung des Exzenters im Drehhebel durch ein zwischen dem Exzenter und der Traverse und/oder durch ein zwischen dem Exzenter und dem Drehhebel angeordnetes Lagerpaar erfolgen, wobei für diese Lager vorzugsweise Gleitlager verwendet werden. Im Falle der beiden halbkreisförmigen Drehlager, mit denen sich der Drehhebel im Bremsengehäuse abstützt, werden demgegenüber Wälzlager bevorzugt; jedoch können u.U. auch hier Gleitlager verwendet werden. Im übrigen wird bezüglich der optimalen Lager auf die nicht vorveröffentlichte **DE-OS 42 12 384** verwiesen, auf deren Offenbarung an dieser Stelle vollinhaltlich bezug genommen sei.

Die Erfindung wird nachstehend anhand der Beschreibung von Ausführungsbeispielen unter Bezugnahme auf die Zeichnung näher erläutert. Es zeigen:
**Fig.1** anhand eines Querschnitts den schematischen Aufbau einer zweispindeligen Zuspannvorrichtung;
**Fig.2** einen Längsschnitt der in Fig. 1 gezeigten Zuspannvorrichtung; und
**Fig.3** den prinzipiellen Aufbau des erfindungsgemäßen Drehhebels.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung unter Bezugnahme auf die Fig.l und 2 näher erläutert werden. Obgleich die in diesen Figuren gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

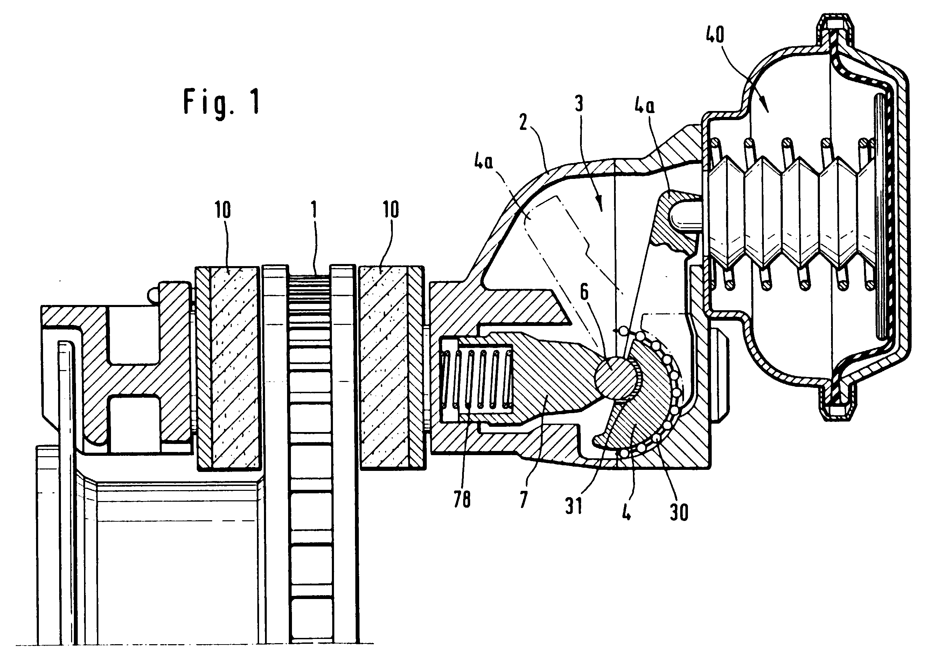

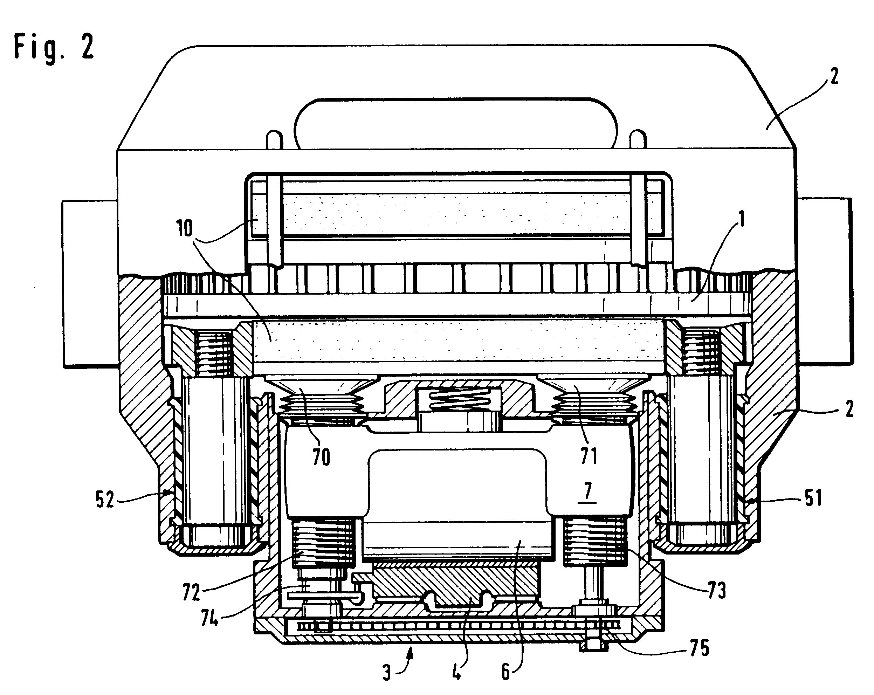

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an der Druckplatte 80 eines Bremsbelags 10 an. Druckplatte 80 und Bremsbelag 10 bilden eine austauschbare Bremsbacke, welche insbesondere in Umfangsrichtung zur Bremsscheibe 1 über nicht gezeigte Halterungen quer zur Bremsscheibe 1 verschiebbar geführt ist, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Zuspannvorrichtung, die demzufolge lediglich eine einzige Stellspindel und damit nur ein Druckstück aufweist, wird die Stellspindel beispielsweise in der Mitte der Traverse 7 angeordnet.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke (Druckplatte 80 und Bremsbelag 10) gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke gegen die Bremsscheibe 1 gepreßt wird.

Falls ein zu großes Lüftspiel vorliegt, was beispielsweise nach einem Belagwechsel oder bei zunehmendem Verschleiß der Bremsbeläge der Fall ist, sorgt die Nachstelleinrichtung 74 dafür, daß sich die Stellspindeln 72 und 73 solange drehen, bis das Lüftspiel seinen Sollwert erreicht. Auf diese Weise ist gewährleistet, daß die Scheibenbremse bis zum vollständigen Abrieb der Bremsbeläge 10 funktionsfähig bleibt.

Fig.3 zeigt den prinzipiellen Aufbau des erfindungsgemäßen Drehhebels, und zwar anhand einer Draufsicht (A) und einer teilweise geschnittenen Seitenansicht (B). Gemäß Fig.3 weist der Drehhebel 4 den bereits erwähnten Betätigungsarm 4a auf, in dessen Endbereich der Druckkolben des Bremszylinders 40 in eine entsprechend geformte Ausnehmung eingreift. Von diesem Endbereich 4a her erstrecken sich zwei Schenkel 4b und 4c, die jeweils in einem Endbereich 4d bzw. 4e enden.

In der Oberseite jedes Endbereichs 4d und 4e ist eine halbkreisförmige Fläche 4f ausgebildet, die zur Aufnahme eines (nicht gezeigten) halbkreisförmigen Lagers dienen. Der Drehhebel 4 stützt sich demzufolge mit zwei solchen Lagern am Gehäuse der Zuspannvorrichtung 3 ab, d.h. diese beiden Lager bilden das in den Fig.1 und 2 gezeigte Lager 30. Für diese Lager wird vorzugsweise ein Wälzlager verwendet.

An der Unterseite jedes Endbereichs 4d und 4e ist ferner eine halbkreisförmige Ausnehmung 4g ausgebildet, die zur Aufnahme eines (nicht gezeigten) halbkreisförmigen Lagers dienen; diese beiden Lager dienen zu Aufnahme der Exzenters 6; jedoch ist es auch möglich, den Radius der Ausnehmungen 4g so zu wählen, daß der Exzenter 6 unmittelbar, d.h. ohnen Zwischenschaltung eines Lagers aufgenommen wird. In diesem Fall ist es zu empfehlen, an der Traverse 7 ein Lager für den Exzenter 6 vorzusehen. Alternativ hierzu ist es auch möglich, sowohl traversen- als auch drehhebelseitig jeweils ein Lager vorzusehen. Die zur Lagerung des Exzenters 6 verwendeten Lager sind vorzugsweise Gleitlager, wobei geeignete Typen solcher Lager in der nicht vorveröffentlichten **DE-OS 42 12 384** näher beschrieben sind.

Erfindungsgemäß ist die Anordnung der beiden Lager in jedem Endbereich 4d und 4e, d.h. des ober- und unterseitigne Lagers, sowie der Verlauf der beiden Schenkel 4b und 4c so gewählt, daß die mit P1 und P2 bezeichneten theoretischen Punkte der Krafteinleitung dieser beiden Lager von oben her gesehen im wesentlichen auf der Mittellinie des betreffenden Schenkels liegen, wie mit den beiden Linien M1 und M2 angedeutet ist. Hierdurch wird erreicht, daß praktisch keine Torsionsspannungen im gabelförmigen Drehhebel 4 aufgebaut werden. Infolgedessen werden keinerlei Querspannungen auf die Lager aufgebracht, so daß diese mit dem optimalen Reibbeiwert und nahezu hysteresefrei arbeiten. Durch diese Maßnahe ist es weiterhin möglich, die außerhalb der Mittellinien M1 und M2 befindlichen Bereiche des Drehhebels 4 materialfrei zu halten, so daß sich ein sehr günstiges Gewicht ergibt, das die ungefederten Massen zu verringern hilft.

## Patentansprüche

1. Druckluftbetätigte Scheibenbremse mit einem eine Bremsscheibe (1) umfassenden Bremssattel (2), auf dessen einer Seite eine Zuspannvorrichtung (3) angeordnet ist, die einen Drehhebel (4) aufweist, der bremsscheibenabgewandt in einem gegenüber dem Bremssattel (2) abgestützten, im wesentlichen halbkreisförmigen Drehlager (30) um eine zur Ebene der Bremsscheibe (1) parallel verlaufende Drehachse (25) schwenkbar gelagert ist und bremsscheibenzugewandt mittels eines drehbar gelagerten Exzenters (6) etwa längsmittig an einer sich parallel zur Drehachse (25) erstreckenden Traverse (7) anliegt, die bezüglich der Bremsscheibe (1) verschiebbar geführt ist und über mindestens ein Druckstück (70, 71) auf eine zuspannseitig im Bremssattel (2) bezüglich der Bremsscheibe (1) verschiebbar gelagerte Bremsbacke (10) einwirkt, wobei der Endbereich eines Betätigungsarms (4a) des Drehhebels (4) mit dem Druckkolben eines Bremszylinders (40) in Eingriff steht,
*dadurch gekennzeichnet, daß*
der Drehhebel (4) im wesentlichen gabelförmig mit zwei sich vom Endbereich des Betätigungsarms (4a) her erstreckenden Schenkeln (4b, 4c) gestaltet ist, wobei das halbkreisförmig geformten Drehlager (30) sowie die Lagerung des Exzenters jeweils durch entsprechende Lagerpaare in den Endbereichen (4d, 4e) der Schenkel gebildet sind, wobei die Anordnung der beiden Lager (30, 31) in den Schenkeln (4b, 4c) sowie der Verlauf der beiden Schenkel (4b, 4c) so gewählt sind, daß die theoretischen Punkte (P1, P2) der Krafteinleitung dieser beiden Lager im wesentlichen auf der Mittellinie des betreffenden Schenkels (4b, 4c) liegen.

2. Druckluftbetätigte Scheibenbremse nach Anspruch 1, *dadurch gekennzeichnet,* daß die Drehlagerung des Exzenters (6) durch ein zwischen dem Exzenter (6) und der Traverse (7) und/oder durch ein zwischen dem Exzenter (6) und dem Drehhebel (4) angeordnetes Lagerpaar (31) erfolgt.

3. Druckluftbetätigte Scheibenbremse nach Anspruch 1 oder 2, *dadurch gekennzeichnet,* daß die beiden halbkreisförmigen Drehlager (30) als Wälzlager ausgebildet sind.

4. Druckluftbetätigte Scheibenbremse nach einem der Ansprüche 1 bis 3, *dadurch gekennzeichnet,* daß die Lager (31) des Exzenters als Gleitlager ausgebildet sind.

## Claims

1. Compressed-air actuated disk brake comprising a caliper *(2)* which reaches around a brake disk *(1)* and on one side of which an application device *(3)* is arranged which has a pivoting lever *(4)* which is disposed, facing away from said brake disk, in an essentially semicircular pivot bearing *(30)* supported with respect to said caliper *(2)* so that it can be swivelled about an axis of rotation *(25)* extending in parallel to the plane of said brake disk *(1)* and, facing the brake disk, by means of a rotatably disposed eccentric *(6)* rests approximately in the longitudinal center against a traverse *(7)* which extends in parallel to said axis of rotation *(25)* and which is guided to be displaceable with respect to said brake disk *(1)* and, by way of at least one pressure member *(70, 71)*, acts upon a brake pad *(10)* which, on the application side, is disposed in said caliper *(2)* to be displaceable with respect to said brake disk *(1)*, the end region of an actuating arm *(4a)* of said pivoting lever *(4)* engaging with the pressure piston of a brake cylinder *(40),*
*characterized in that*
said pivoting lever *(4)* is designed to be essentially fork-shaped with two legs *(4b, 4c)* extending from the end region of said actuating arm *(4a),* said semicircular pivot bearing *(30)* as well as the bearing of said eccentric each being formed by corresponding pairs of bearings in the end regions *(4d, 4e)* of said legs, the arrangement of said two bearings *(30, 31)* in said legs *(4b, 4c)* as well as the course of said two legs *(4b, 4c)* being selected such that the theoretical points of the introduction of force *(P1, P2)* of said two bearings are essentially situated on the center line of the corresponding leg *(4b, 4c).*

2. Compressed-air actuated disk brake according to claim 1, *characterized in that* the pivotal mounting of said eccentric *(6)* is achieved by a pair of bearings *(31)* arranged between said eccentric *(6)* and said traverse *(7)* and/or by a pair of bearings *(31)* arranged between said eccentric *(6)* and said pivoting lever *(4)*.

3. Compressed-air actuated disk brake according to claim 1 or 2, *characterized in that* said two semicircular pivot bearings *(30)* are constructed as roller bearings.

4. Compressed-air actuated disk brake according to one of claims 1 to 3, *characterized in that* said bearings *(31)* of said eccentric are constructed as slide bearings.

## Revendications

1. Frein à disque à air comprimé comportant un étrier de frein (2) cernant un disque de frein (1), sur un côté duquel un dispositif de serrage (3) est disposé qui présente un levier pivotant (4) qui sur le côté détourné du disque de frein est logé de manière à pouvoir pivoter autour d'un axe de pivotement (25) s'étendant parallèlement au plan du disque de frein (1) dans un coussinet de pivotement (30) appuyé par rapport à l'étrier de frein (2) et étant de forme substantiellement semi-circulaire et qui sur le côté détourné du disque de frein repose moyennant un excentrique (6) logé de manière à pouvoir pivoter à peu près au milieu dans le sens longitudinal contre une traverse (7) s'étendant parallèlement à l'axe de pivotement (25), qui par rapport au disque de frein (1) est guidé de manière à pouvoir se déplacer et qui agit par l'intermédiaire d'au moins une pièce de pression (70, 71) sur une mâchoire de frein (10) logée de manière à pouvoir se déplacer par rapport au disque de frein (1) du côté du dispositif de serrage dans l'étrier de frein (2), la zone d'extrémité d'un bras d'actionnement (4a) du levier pivotant (4) étant en prise avec le piston de pression d'un cylindre de frein (40),
caractérisé en ce que le levier pivotant (4) a une configuration essentiellement en forme de fourche avec deux branches (4b, 4c) s'étendant à partir de la zone d'extrémité du levier d'actionnement (4a), le coussinet de pivotement (30) étant formé en demi-cercle et le paliers de l'excentrique étant formé par des paires de palier correspondants dans les zones d'extrémité (4d, 4e) des branches, la disposition des deux paliers (30, 31) dans les branches (4b, 4c) ainsi que l'orientation des deux branches (4b, 4c) étant choisies de manière à ce que les points théoriques (P1, P2) de la transmission de la force des deux paliers se trouvent essentiellement sur la ligne médiane de la branche (4b, 4c) correspondante.

2. Frein à disque à air comprimé selon la revendication 1, caractérisé en ce que le logement pivotant de l'excentrique (6) est réalisé par une paire de paliers disposée entre l'excentrique (6) et la traverse (7) et/ou une paire de paliers disposée entre l'excentrique (6) et le levier pivotant (4).

3. Frein à disque à air comprimé selon les revendications 1 ou 2, caractérisé en ce que les deux coussinets de pivotement en forme de demi-cercle (30) sont formés comme paliers à roulement.

4. Frein à disque à air comprimé selon l'une quelconque des revendications 1 à 3, caractérisé en ce que les paliers (31) de l'excentrique sont formés comme palier lisse.
